# EUROPEAN PATENT SPECIFICATION

(11) **EP 3 446 051 B1**
(45) Date of publication and mention of the grant of the patent: **11.01.2023**
(21) Application number: 17723175.0
(22) Date of filing: 19.04.2017
(51) Int. Cl.: F25B 43/04, F25B 45/00

(54) **PURGE SYSTEM FOR CHILLER SYSTEM**
REINIGUNGSSYSTEM FÜR KÜHLERSYSTEM
SYSTÈME DE PURGE POUR SYSTÈME DE REFROIDISSEUR

(30) Priority: 19.04.2016 US 201662324667 P
(43) Date of publication of application: 27.02.2019
(60) Divisional application: 22212070.1
(73) Proprietor: Carrier Corporation, Farmington, CT 06032 (US)
(72) Inventor: MA, Zidu, Farmington Connecticut 06032 (US); RYDKIN, Ivan, Rochester NY 14607 (US); CLOUGH, Warren, Syracuse New York 13221 (US)
(74) Representative: Dehns
(86) International application number: PCT/US2017/028235
(87) International publication number: WO 2017/184663

(56) References cited:
- US-A- 4 842 621
- US-A- 4 984 431
- US-A- 5 515 690

## Description

### BACKGROUND

Embodiments relate generally to chiller systems used in air conditioning systems, and more particularly to a purge system for removing non-condensables from a chiller system.

Low pressure chiller systems may include sections that operate below atmospheric pressure. As a result, leaks in the chiller system may draw non-condensables, such as air into the system, contaminating the refrigerant. This non-condensable degrades the performance of the chiller system. To address this problem, existing low pressure chillers include a purge unit to remove non-condensables. For typical purge systems, there are usually two steps in the process, a condensing step and a residual collection step. The condensing step can be an air cooled condenser or a condenser cooled by another vapor compression cycle, i.e. another independent refrigeration system. The residual collection step usually involves an adsorption medium (such as activated carbon) to collect the refrigerant residual to cut down the amount of refrigerant released to the atmosphere. The adsorption medium can be either regenerated onboard the purge system or be regenerated offline. Onboard regeneration has a better recovery of refrigerant than offline regeneration, but state of the art purge systems with onboard regeneration of the adsorption medium cannot achieve a refrigerant release to ambient lower than that with offline regeneration.

US 5515690 discloses a vessel that attaches to a gas discharge line of a purge system. Adsorbent material is disclosed within the vessel. In a Vent Mode, the purge system vents into the vessel and the vessel vents to atmosphere, whereby the adsorbent material in the vessel adsorbs refrigerant. When the adsorbent material has adsorbed a certain amount of refrigerant, the system switches from the Vent Mode to a Recycle Mode. In the Recycle Mode, the vessel is isolated from the purge system and the atmosphere and the vessel is placed in fluid communication with an evaporator of a refrigerant system. Refrigerant is drawn out of the adsorbent material and into the evaporator.

### SUMMARY

A first aspect of the present invention provides a purge system for removing non-condensables from a chiller system, the purge system comprising: a purge chamber; a first carbon bed fluidly connected to the purge chamber, and into which a flow of refrigerant and non-condensables is selectably directable from the purge chamber to remove the non-condensables therefrom; a vent line fluidly connected to the first carbon bed to dispose of the collected non-condensables; and a heater operably connected to the first carbon bed to selectably heat the first carbon bed to release refrigerant therefrom and direct the released refrigerant to the purge chamber, characterised by: a second carbon bed fluidly connected to the purge chamber, and into which the flow of refrigerant and non-condensables is selectably directable from the purge chamber to remove the non-condensables therefrom, wherein the purge system is configured such that when the first carbon bed is heated to release refrigerant therefrom, the flow of refrigerant and non-condensables is directed to the second carbon bed to remove the non-condensables therefrom.

The first and second carbon beds may be arranged in a fluidly parallel arrangement.

A heater may be operably connected to a carbon bed of the first and second carbon beds.

A sensor may be configured to detect presence of refrigerant in the vent line.

A pumping element may urge flow from the purge chamber to the plurality of carbon beds.

The pumping element may be one of a compressor or a vacuum pump.

A purge chamber outlet may selectably direct refrigerant from the purge chamber to the chiller system.

A second aspect of the present invention provides a method of removing non-condensables from refrigerant in a chiller system, the method comprising: moving a flow of refrigerant and associated non-condensables from a purge chamber to a plurality of carbon beds; directing the flow through a first carbon bed of the plurality of carbon beds thereby capturing refrigerant at the first carbon bed; venting the non-condensables to ambient; heating the first carbon bed to regenerate the first carbon bed, releasing refrigerant captured by the first carbon bed; and directing a decontaminated flow of refrigerant, with non-condensables removed, to the purge chamber; characterised by: when the first carbon bed is heated to release refrigerant therefrom, directing the flow of refrigerant and non-condensables to a second carbon bed of the plurality of carbon beds to remove the non-condensables therefrom.

The vented non-condensables may be sensed for the presence of refrigerant in the vented non-condensables, and the release of the non-condensables to ambient may be halted if refrigerant is detected by the sensor

The released refrigerant may be directed from the plurality of carbon beds to the purge chamber.

The flow may be urged from and to the purge chamber via a pumping element.

The decontaminated flow of refrigerant may be urged from the purge chamber to the chiller system.

These and other advantages and features will become more apparent from the following description taken in conjunction with the drawings.

### BRIEF DESCRIPTION OF THE DRAWINGS

The subject matter is particularly pointed out and distinctly claimed at the conclusion of the specification. The foregoing and other features, and advantages of the present disclosure are apparent from the following detailed description taken in conjunction with the accompanying drawings in which:
FIG. 1 is a schematic view of an embodiment of a chiller system; and
FIG. 2 is a schematic view of an embodiment of a purge system for a chiller system.

The detailed description explains embodiments, together with advantages and features, by way of example with reference to the drawings.

### DETAILED DESCRIPTION

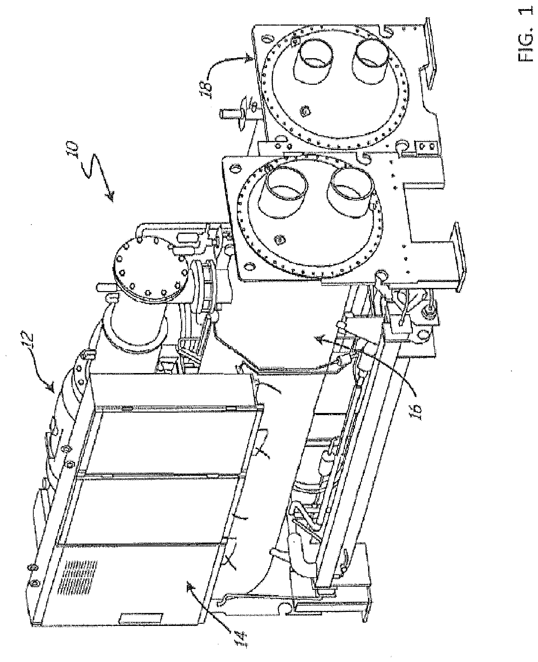

FIG. 1 depicts a chiller system 10 in an exemplary embodiment. Chiller system 10 is a screw chiller, but embodiments of the invention are appropriate for use with other compression chiller assemblies, such as, for example, a centrifugal chiller. As shown in FIG. 1, chiller system 10 includes compressor 12, variable frequency drive 14, condenser 16 and cooler 18.

In operation, gaseous refrigerant is induced into compressor 12 and compressed. Compressor 12 is driven by a motor under the control of variable frequency drive 14. Variable frequency drive 14 controls the frequency of the alternating current (AC) supplied to the motor thereby controlling the speed of the motor and the output of compressor 12. After the refrigerant is compressed, the high temperature, high pressure refrigerant gas is supplied to condenser 16. In condenser 16, the gaseous refrigerant condenses into liquid as it gives up heat. The condensed liquid refrigerant then flows into cooler 18, which circulates chilled water. The low pressure environment in cooler 18 causes the refrigerant to change states to a gas and, as it does so, it absorbs the required heat of vaporization from the chilled water, thus reducing the temperature of the water. The low pressure vapor is then drawn into the inlet of compressor 12 and the cycle is continually repeated. The chilled water is circulated through a distribution system to cooling coils for, for example, comfort air conditioning.

Portions of the chiller system 10 (e.g., cooler 18) may operate at a low pressure (e.g., less than atmosphere) which can cause non-condensables (e.g., ambient air) to be drawn into the chiller system 10. The non-condensables in the refrigerant flow of the chiller system 10 degrades performance of the chiller.

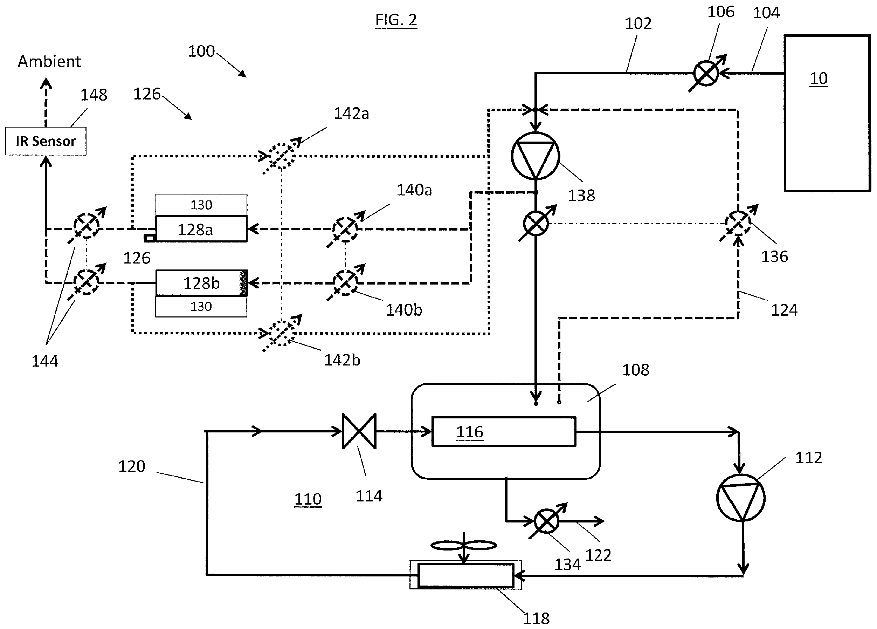

FIG. 2 depicts a purge system 100 fluidly connected to the chiller system 10, for removing non-condensables from the chiller system 10. Purge system 100 includes a purge input line 102 through which chiller refrigerant 104, containing non-condensables, flows from the chiller system 10 into the purge system 100. Flow of the chiller refrigerant 104 along the purge input line 102 is controlled by purge input valve 106. The purge input line 102 directs the chiller refrigerant 104 into a purge tank 108, which is one element of a purge vapor compression cycle 110, including a purge compressor 112, a purge expansion valve 114, a purge evaporator 116 that resides in the purge tank 108, and a purge condenser 118, which may be air cooled or water cooled. The purge vapor compression cycle utilizes a purge refrigerant flow 120, which may be the same refrigerant material as the chiller refrigerant 104, or alternatively may be a different refrigerant material. At the purge evaporator 116, the purge refrigerant flow 120 exchanges thermal energy with the chiller refrigerant 104, condenses at least a portion of the chiller refrigerant 104 to a liquid, with a lesser degree of non-condensables, which is directed back to chiller system 10 through purge output line 122.

The remaining chiller refrigerant 104 with non-condensables is collected at the purge tank 108, which becomes pressurized by the increasing amount of chiller refrigerant 104 and non-condensables present in the purge tank 108. An evacuation line 124 connects the purge tank 108 to a regeneration system 126 arranged to remove the non-condensables from the chiller refrigerant 104 and recover chiller refrigerant 104 to be returned to the chiller system 10. The regeneration system 126 includes two or more carbon beds 128 fluidly connected to the evacuation line 124. In some embodiments, the carbon beds 128 are arranged in a fluidly parallel arrangement as shown in FIG. 2.

Referring again to FIG. 2, each carbon bed 128 is in thermal communication with a heater 130 utilized to periodically regenerate the associated carbon bed 128 by heating the carbon bed 128 and direct the non-condensables collected at the carbon bed 128 to ambient 132. Multiple carbon beds 128 allow longer continuous operation of the regeneration system 126 and connected purge system 100 as will be explained in more detail below.

Referring to FIG. 2, when purge tank 108 reaches a selected pressure indicating buildup of chiller refrigerant 104 and non-condensables in the purge tank 108, purge input valve 106 and a purge outlet valve 134 are closed to isolate the purge system 106 and the regeneration system 126 from the chiller system 10. Evacuation valve 136 is opened and chiller refrigerant 104 and non-condensables move from the purge tank 108 to the regeneration system 126, either by pressure in the purge tank 108 or by regeneration compressor 138 or vacuum pump. Carbon bed input valves 140a and 140b are selectably opened to direct the chiller refrigerant 104 and non-condensables to a first carbon bed 128a or alternatively to a second carbon bed 128b. Similarly, carbon bed output valves 142a and 142b are opened. The chiller refrigerant 104 and non-condensables are flowed across the first carbon bed 128a or the second carbon bed 128b, where the carbon material present in the carbon bed 128 absorbs the refrigerant. The non-condensables are released to ambient via a vent valve 144, after flowing past an IR sensor 148.

When the refrigerant has fully adsorbed onto the carbon bed 128, the refrigerant will then begin to pass through the carbon bed 128 and flow by an IR sensor 148 to ambient via a vent valve 144 along with the non-condensables. The IR sensor 148 is utilized to sense for the presence of refrigerant in the vent flow. In the embodiment of FIG. 2, if refrigerant is detected in the vent flow by the IR sensor 148, the vent valve 144 is closed, stopping the flow from the carbon bed 128. The carbon bed 128 is then regenerated utilizing heater 130 to release any refrigerant captured in the carbon bed 128. The refrigerant 104 released from the carbon bed 128 is flowed through the carbon bed output valve 142 to the purge tank 108, where it is returned to the chiller system 10 via the purge output line 122. Through the parallel arrangement of carbon beds 128a and 128b and the valving of the purge system 100, while, for example, first carbon bed 128a is being regenerated, the second carbon bed 128b may utilized normally for purge system 100 operations.

The purge system 100 with dual carbon beds 128 and IR sensor 148 results in a high rate of refrigerant recovery via operation of the purge system 100, while utilizing the IR sensor 148 to reduce refrigerant emissions to ambient. While the embodiments shown and described herein utilize two carbon beds 128, one skilled in the art will readily appreciate that in other embodiments three or more carbon beds 128 may be utilized to further increase operational efficiency of the purge system 100.

While the invention has been described in detail in connection with only a limited number of embodiments, it should be readily understood that the invention is not limited to such disclosed embodiments. Accordingly, the invention is not to be seen as limited by the foregoing description, but is only limited by the scope of the appended claims.

## Claims

1. A purge system (100) for removing non-condensables from a chiller system (10), the purge system (100) comprising:
a purge chamber (108);
a first carbon bed (128a) fluidly connected to the purge chamber (108), and into which a flow of refrigerant and non-condensables is selectably directable from the purge chamber (108) to remove the non-condensables therefrom;
a vent line fluidly connected to the first carbon bed (128a) to dispose of the collected non-condensables; and
a heater (130) operably connected to the first carbon bed (128a) to selectably heat the first carbon bed (128a) to release refrigerant therefrom and direct the released refrigerant to the purge chamber (108),
**characterised by**:
a second carbon bed (128b) fluidly connected to the purge chamber (108), and into which the flow of refrigerant and non-condensables is selectably directable from the purge chamber (108) to remove the non-condensables therefrom,
wherein the purge system (100) is configured such that when the first carbon bed (128a) is heated to release refrigerant therefrom, the flow of refrigerant and non-condensables is directed to the second carbon bed (128b) to remove the non-condensables therefrom.

2. The purge system (100) of claim 1 wherein the first and second carbon beds (128a, 128b) are arranged in a fluidly parallel arrangement.

3. The purge system (100) of claim 1 or 2, further comprising a plurality of heaters (130), each heater operably connected to a carbon bed of the first and second carbon beds (128a, 128b).

4. The purge system (100) of claim 1, further comprising a sensor (148) to detect presence of refrigerant in the vent line.

5. The purge system (100) of any of claims 1-4, further comprising a pumping element (138) to urge flow from the purge chamber to the first and second carbon beds.

6. The purge system (100) of claim 5, wherein the pumping element (138) is one of a compressor or a vacuum pump.

7. The purge system (100) of any of claims 1-6, further comprising a purge chamber outlet to selectably direct refrigerant from the purge chamber (108) to the chiller system.

8. A method of removing non-condensables from refrigerant in a chiller system (10), the method comprising:
moving a flow of refrigerant and associated non-condensables from a purge chamber (108) to a plurality of carbon beds (128a, 128b);
directing the flow through a first carbon bed (128a) of the plurality of carbon beds (128a, 128b) thereby capturing refrigerant at the first carbon bed (128a);
venting the non-condensables to ambient;
heating the first carbon bed (128a) to regenerate the first carbon bed (128a), releasing refrigerant captured by the first carbon bed (128a); and
directing a decontaminated flow of refrigerant, with non-condensables removed, to the purge chamber (108);
**characterised by**:
when the first carbon bed (108a) is heated to release refrigerant therefrom, directing the flow of refrigerant and non-condensables to a second carbon bed (128b) of the plurality of carbon beds (128a, 128b) to remove the non-condensables therefrom.

9. The method of claim 8, further comprising:
sensing the vented non-condensables for the presence of refrigerant in the vented non-condensables; and
halting the release of the non-condensables to ambient if refrigerant is detected by the sensor (148).

10. The method of claim 8, further comprising directing the released refrigerant from the plurality of carbon beds (128a, 128b) to the purge chamber (108).

11. The method of any of claims 8-10, further comprising urging the flow from and to the purge chamber (108) via a pumping element (138).

12. The method of any of claims 8-11, further comprising urging the decontaminated flow of refrigerant from the purge chamber (108) to the chiller system (10).

## Patentansprüche

1. Reinigungssystem (100) zum Entfernen nicht kondensierbarer Stoffe aus einem Kühlsystem (10), wobei das Reinigungssystem (100) Folgendes umfasst:
eine Reinigungskammer (108);
ein erstes Kohlenstoffbett (128a), das strömungstechnisch mit der Reinigungskammer (108) verbunden ist und in das ein Strom von Kühlmittel und nicht kondensierbaren Stoffen selektierbar aus der Reinigungskammer (108) geleitet werden kann, um die nicht kondensierbaren Stoffe daraus zu entfernen;
eine Abzugsleitung, die strömungstechnisch mit dem ersten Kohlenstoffbett (128a) verbunden ist, um die gesammelten, nicht kondensierbaren Stoffe abzugeben; und
eine Heizeinrichtung (130), die betriebsbereit mit dem ersten Kohlenstoffbett (128a) verbunden ist, um das erste Kohlenstoffbett (128a) selektierbar zu erhitzen, um Kühlmittel aus diesem freizusetzen und das freigesetzte Kühlmittel zu der Reinigungskammer (108) zu leiten,
**gekennzeichnet durch**:
ein zweites Kohlenstoffbett (128b), das strömungstechnisch mit der Reinigungskammer (108) verbunden ist und in das der Strom von Kühlmittel und nicht kondensierbaren Stoffen selektierbar aus der Reinigungskammer (108) geleitet werden kann, um die nicht kondensierbaren Stoffe daraus zu entfernen,
wobei das Reinigungssystem (100) so ausgelegt ist, dass, wenn das erste Kohlenstoffbett (128a) erhitzt wird, um Kühlmittel aus diesem freizusetzen, der Strom von Kühlmittel und nicht kondensierbaren Stoffen zu dem zweiten Kohlenstoffbett (128b) geleitet wird, um die nicht kondensierbaren Stoffe daraus zu entfernen.

2. Reinigungssystem (100) nach Anspruch 1, wobei das erste und zweite Kohlenstoffbett (128a, 128b) in einer strömungstechnisch parallelen Anordnung angeordnet sind.

3. Reinigungssystem (100) nach Anspruch 1 oder 2, weiter umfassend eine Vielzahl von Heizeinrichtungen (130), wobei jede Heizeinrichtung betriebsbereit mit einem Kohlenstoffbett von dem ersten und zweiten Kohlenstoffbett (128a, 128b) verbunden ist.

4. Reinigungssystem (100) nach Anspruch 1, weiter umfassend einen Sensor (148) zum Erfassen des Vorhandenseins von Kühlmittel in der Abzugsleitung.

5. Reinigungssystem (100) nach einem der Ansprüche 1-4, weiter umfassend ein Pumpelement (138), um einen Strom von der Reinigungskammer zu dem ersten und zweiten Kohlenstoffbett zu pressen.

6. Reinigungssystem (100) nach Anspruch 5, wobei das Pumpelement (138) eines von einem Kompressor oder einer Vakuumpumpe ist.

7. Reinigungssystem (100) nach einem der Ansprüche 1-6, weiter umfassend einen Reinigungskammerauslass, um Kühlmittel selektierbar von der Reinigungskammer (108) zu dem Kühlsystem zu leiten.

8. Verfahren zum Entfernen nicht kondensierbarer Stoffe aus Kühlmittel in einem Kühlsystem (10), wobei das Verfahren Folgendes umfasst:
Bewegen eines Stroms von Kühlmittel und zugehörigen nicht kondensierbaren Stoffen von einer Reinigungskammer (108) zu einer Vielzahl von Kohlenstoffbetten (128a, 128b);
Leiten des Stroms durch ein erstes Kohlenstoffbett (128a) der Vielzahl von Kohlenstoffbetten (128a, 128b), wodurch Kühlmittel am ersten Kohlenstoffbett (128a) aufgefangen wird;
Abziehen der nicht kondensierbaren Stoffe zur Umgebung;
Erhitzen des ersten Kohlenstoffbetts (128a), um das erste Kohlenstoffbett (128a) zu regenerieren, wobei Kühlmittel, das von dem ersten Kohlenstoffbett (128a) aufgefangen wurde, freigesetzt wird; und
Leiten eines dekontaminierten Kühlmittelstroms, aus dem nicht kondensierbare Stoffe entfernt sind, zu der Reinigungskammer (108);
**gekennzeichnet durch**:
wenn das erste Kohlenstoffbett (108a) erhitzt wird, um Kühlmittel daraus freizusetzen, Leiten des Stroms von Kühlmittel und nicht kondensierbaren Stoffen zu einem zweiten Kohlenstoffbett (128b) der Vielzahl von Kohlenstoffbetten (128a, 128b), um die nicht kondensierbaren Stoffe daraus zu entfernen.

9. Verfahren nach Anspruch 8, weiter umfassend:
Abfühlen der abgezogenen, nicht kondensierbaren Stoffe auf das Vorhandensein von Kühlmittel in den abgezogenen, nicht kondensierbaren Stoffen; und
Anhalten der Freisetzung der nicht kondensierbaren Stoffe an die Umgebung, falls Kühlmittel von dem Sensor (148) erfasst wird.

10. Verfahren nach Anspruch 8, weiter umfassend Leiten des freigesetzten Kühlmittels von der Vielzahl von Kohlenstoffbetten (128a, 128b) zu der Reinigungskammer (108).

11. Verfahren nach einem der Ansprüche 8-10, weiter umfassend Pressen des Stroms von und zu der Reinigungskammer (108) mit Hilfe eines Pumpelements (138).

12. Verfahren nach einem der Ansprüche 8-11, weiter umfassend Pressen des dekontaminierten Kühlmittelstroms von der Reinigungskammer (108) zu dem Kühlsystem (10).

## Revendications

1. Système de purge (100) permettant d'éliminer des incondensables d'un système de refroidissement (10), le système de purge (100) comprenant :
une chambre de purge (108) ;
un premier lit de carbone (128a) relié de manière fluidique à la chambre de purge (108), et dans lequel un écoulement de réfrigérant et d'incondensables peut être dirigé de manière sélectionnable à partir de la chambre de purge (108) pour éliminer les incondensables de celui-ci ;
une conduite d'évacuation reliée de manière fluidique au premier lit de carbone (128a) pour rejeter les incondensables collectés ; et
un dispositif de chauffage (130) relié de manière fonctionnelle au premier lit de carbone (128a) pour chauffer de manière sélectionnable le premier lit de carbone (128a) pour libérer un réfrigérant à partir de celui-ci et diriger le réfrigérant libéré vers la chambre de purge (108),
**caractérisé par** :
un second lit de carbone (128b) relié de manière fluidique à la chambre de purge (108), et dans lequel l'écoulement de réfrigérant et d'incondensables peut être dirigé de manière sélectionnable à partir de la chambre de purge (108) pour éliminer les incondensables de celui-ci,
dans lequel le système de purge (100) est configuré de telle sorte que lorsque le premier lit de carbone (128a) est chauffé pour libérer un réfrigérant à partir de celui-ci, l'écoulement de réfrigérant et d'incondensables soit dirigé vers le second lit de carbone (128b) pour éliminer les incondensables de celui-ci.

2. Système de purge (100) selon la revendication 1 dans lequel les premier et second lits de carbone (128a, 128b) sont agencés en un agencement parallèle de manière fluidique.

3. Système de purge (100) selon la revendication 1 ou 2, comprenant en outre une pluralité de dispositifs de chauffage (130), chaque dispositif de chauffage étant relié de manière fonctionnelle à un lit de carbone des premier et second lits de carbone (128a, 128b).

4. Système de purge (100) selon la revendication 1, comprenant en outre un capteur (148) pour détecter une présence de réfrigérant dans la conduite d'évacuation.

5. Système de purge (100) selon l'une quelconque des revendications 1-4, comprenant en outre un élément de pompage (138) pour pousser un écoulement à partir de la chambre de purge jusqu'aux premier et second lits de carbone.

6. Système de purge (100) selon la revendication 5, dans lequel l'élément de pompage (138) est un d'un compresseur ou d'une pompe à vide.

7. Système de purge (100) selon l'une quelconque des revendications 1-6, comprenant en outre une sortie de chambre de purge pour diriger de manière sélectionnable un réfrigérant à partir de la chambre de purge (108) vers le système de refroidissement.

8. Procédé d'élimination d'incondensables d'un réfrigérant dans un système de refroidissement (10), le procédé comprenant :
le fait de déplacer un écoulement de réfrigérant et d'incondensables associés à partir d'une chambre de purge (108) jusqu'à une pluralité de lits de carbone (128a, 128b) ;
le fait de diriger l'écoulement à travers un premier lit de carbone (128a) de la pluralité de lits de carbone (128a, 128b) capturant ainsi un réfrigérant au niveau du premier lit de carbone (128a) ;
une évacuation des incondensables dans l'air ambiant ;
un chauffage du premier lit de carbone (128a) pour régénérer le premier lit de carbone (128a), libérant un réfrigérant capturé par le premier lit de carbone (128a) ; et
le fait de diriger un écoulement de réfrigérant décontaminé, avec des incondensables éliminés, vers la chambre de purge (108) ;
**caractérisé par** :
lorsque le premier lit de carbone (108a) est chauffé pour libérer un réfrigérant à partir de celui-ci, le fait de diriger l'écoulement de réfrigérant et d'incondensables vers un second lit de carbone (128b) de la pluralité de lits de carbone (128a, 128b) pour éliminer les incondensables de celui-ci.

9. Procédé selon la revendication 8, comprenant en outre :
une détection des incondensables évacués à la recherche de la présence de réfrigérant dans les incondensables évacués ; et
une interruption de la libération des incondensables dans l'air ambiant si un réfrigérant est détecté par le capteur (148).

10. Procédé selon la revendication 8, comprenant en outre le fait de diriger le réfrigérant libéré à partir de la pluralité de lits de carbone (128a, 128b) vers la chambre de purge (108).

11. Procédé selon l'une quelconque des revendications 8-10, comprenant en outre le fait de pousser l'écoulement à partir de et jusqu'à la chambre de purge (108) via un élément de pompage (138).

12. Procédé selon l'une quelconque des revendications 8-11, comprenant en outre le fait de pousser l'écoulement de réfrigérant décontaminé à partir de la chambre de purge (108) jusqu'au système de refroidissement (10).
